# EUROPEAN PATENT APPLICATION

(11) **EP 2 806 431 A1**
(43) Date of publication of application: **26.11.2014**
(21) Application number: 13739036.5
(22) Date of filing: 17.01.2013
(51) Int. Cl.: H01B 13/012

(54) **METHOD FOR MANUFACTURING WIRE HARNESS AND DEVICE FOR MANUFACTURING WIRE HARNESS**

(30) Priority: 20.01.2012 JP 2012009661
(71) Applicant: Yazaki Corporation, Minato-ku Tokyo 108-8333 (JP)
(72) Inventor: YAMAMOTO, Masataka, Kosai-shi Shizuoka 431-0431 (JP); SATO, Kunihiko, Kosai-shi Shizuoka 431-0431 (JP); SORA, Masahiro, Kosai-shi Shizuoka 431-0431 (JP); SUGAWARA, Tomoyuki, Makinohara-shi Shizuoka 421-0407 (JP)
(74) Representative: Grünecker, Kinkeldey, Stockmair & Schwanhäusser
(86) International application number: PCT/JP2013/050775
(87) International publication number: WO 2013/108826

(57) **Abstract**

An object of the present invention is to provide a method for manufacturing a wiring harness and a device for manufacturing the wiring harness able to reduce a stock of exterior components, and to reduce time for an adjusting operation by saving time and labor for adjusting assembling positions of the exterior components.

A wire harness (51) is manufactured by: forming a standard harness (31) by integrally forming exterior components (35) with a standard electric wire (33) at predetermined positions by a forming machine (11) provided on upstream in a conveying direction of a conveying device (65) for conveying a plurality of wiring boards (63a to 63m) in the conveying direction (an arrow "a" direction); wiring the standard harness (31) on the wiring boards (63a to 63m), and wiring a plurality of electric wires (43) along the standard harness (31); and then bundling the standard harness (31) and the plurality of electric wires (43).

## Description

### [Technical Field]

The present invention relates to a method for manufacturing a wiring harness arranged in a vehicle or the like and a device for manufacturing the wiring harness.

### [Background Art]

Various electronic devices are mounted on a vehicle or the like, and a wiring harness is arranged in the vehicle for supplying electric power from a power source such as battery and control signals from a controller to the electronic devices.

For example, such a wiring harness includes: a bundle of electric wires made by bundling a plurality of electric wires; and an exterior component externally mounted on the bundle of electric wires. A connector is provided at ends of the electric wires.

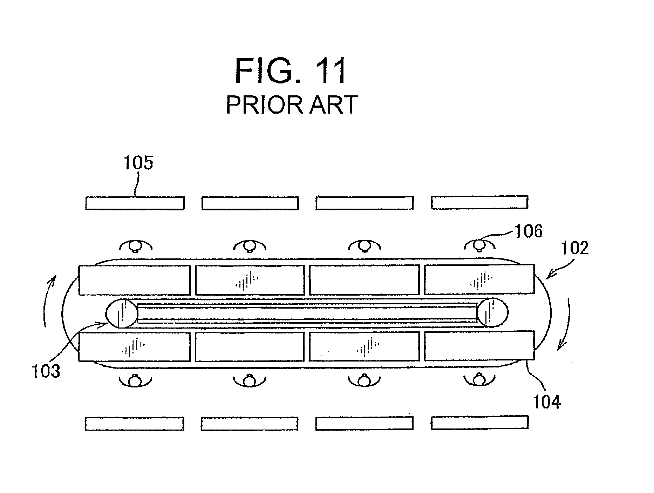

Further, as shown in Fig. 11, the wiring harness is, for example, assembled in a harness manufacturing line 102 having a belt conveyor device 103 installed in a factory and plurality of wiring boards 104 conveyed in a conveying direction (an arrow direction in Fig. 11) by the belt conveyor 103 (for example, see PTL 1).

A plurality of operators 106 is arranged corresponding respectively to the plurality of wiring boards 104 surrounding the harness manufacturing line 102 around the harness manufacturing line 102 described in PTL 1 or the like. Further, a plurality of components boxes 105 is provided corresponding to the plurality of operators 106.

Further, exterior components such as a grommet, a protector, and a wiring clip attached to a main harness or a sub harness are stored in the components box 105. Stock components stored in the components box 105 prevent the harness manufacturing line 102 from being stopped caused by a lack of the exterior components.

### [Citation List]

### [Patent Literature]

[PTL1]
JP, A, H09-141529

### [Summary of Invention]

### [Technical Problem]

However, according to the conventional harness manufacturing line 102 described in PTL 1, for example, because the exterior components are refilled from outside of the factory, there is a problem that many exterior components are required to be stored in the components box 105, and to be managed as a stock.

Further, because an installation space of the components box 105 for storing many exterior components or the like should be secured around the harness manufacturing line 102, there is a problem that an installation space of the harness manufacturing line 102 becomes large, and a working space in the factory should be secured widely.

Further, because the exterior components are attached to predetermined positions on a panel of a vehicle body or the like, it is necessary to match an assembling position of the exterior component assembled to the main harness or the sub harness with the predetermined position, and there is a problem that time and effort in an adjusting operation for adjusting the assembling position of the exterior component may be increased.

An object of the present invention is to solve the above problems. Namely, an object of the present invention is to provide a method for manufacturing a wiring harness and a device for manufacturing the wiring harness able to reduce a stock of exterior components, and to reduce time for an adjusting operation by saving time and labor for adjusting assembling positions of the exterior components.

### [Solution to Problem]

For solving the above problems, according to a first aspect of the present invention, there is provided a method for manufacturing a wiring harness including the steps of
forming a standard harness by integrally molding an exterior component in a predetermined position of a standard electric wire by a molding machine provided on upstream in a conveying direction of a conveyor conveying a plurality of wiring boards in the conveying direction;
wiring the standard harness on the wiring board, and wiring a plurality of electric wires along the standard harness; and
bundling the standard harness and the plurality of electric wires.

According to a second aspect of the present invention, there is provided the method for manufacturing a wiring harness as described in the first aspect, wherein the standard harness is made by integrally molding a plurality of exterior components by a plurality of molding machines with a single standard electric wire.

According to a third aspect of the present invention, there is provided the method for manufacturing a wiring harness as described in the first aspect, wherein the standard harness is made by integrally molding a plurality of exterior components by a plurality of molding machines with a plurality of standard electric wires and by bundling the plurality of standard electric wires.

According to a fourth aspect of the present invention, there is provided the method for manufacturing a wiring harness as described in the second or third aspect,
wherein the standard harness is made by integrally molding the exterior components by the molding machines with the standard electric wire in synchronization with timing of conveying the wiring boards.

According to a fifth aspect of the present invention, there is provided the method for manufacturing a wiring harness as described in the second or third aspect,
wherein a set is made by combining the plurality of molding machines, and
wherein the standard harnesses are made by integrally molding the exterior components with the standard electric wires by a plurality of sets.

According to a sixth aspect of the present invention, there is provided the method for manufacturing a wiring harness as described in the fifth aspect, wherein the standard harnesses are made by integrally molding the exterior components with the standard electric wires by the plurality of sets in synchronization with timing of conveying the wiring boards.

According to a seventh aspect of the present invention, there is provided the method for manufacturing a wiring harness as described in any one of the first to sixth aspects,
wherein the exterior components have multiple types.

According to an eighth aspect of the present invention, there is provided the method for manufacturing a wiring harness as described in any one of the first to seventh aspects,
wherein the exterior component is a wiring clip.

According to a ninth aspect of the present invention, there is provided a device for manufacturing a wiring harness comprising:
a harness manufacturing line conveying a plurality of wiring boards in a conveying direction; and
a molding machine provided together with the harness manufacturing line,
and integrally molding an exterior component in a predetermined position of a standard electric wire,
wherein the molding machine is provided on upstream in the conveying direction of the harness manufacturing line.

According to a tenth aspect of the present invention, there is provided the device for manufacturing a wiring harness as described in the ninth aspect, wherein a plurality of molding machines is provided on upstream in the conveying direction of the harness manufacturing line.

According to an eleventh aspect of the present invention, there is provided the device for manufacturing a wiring harness as described in the ninth or tenth aspect,
wherein a standard harness is made by integrally molding the exterior component with the standard electric wire by the molding machine in synchronization with timing of the harness manufacturing line.

According to a twelfth aspect of the present invention, there is provided the device for manufacturing a wiring harness as described in the tenth aspect, wherein a set is made by combining the plurality of molding machines, and wherein a plurality of sets is provided on upstream in the conveying direction of the harness manufacturing line.

According to a thirteenth aspect of the present invention, there is provided the device for manufacturing a wiring harness as described in the twelfth aspect,
wherein the standard harnesses are made by integrally molding the exterior components with the standard electric wires by the plurality of sets in synchronization with timing of the harness manufacturing line.

### [Advantageous Effects of Invention]

According to the method for manufacturing a wiring harness as described in the first aspect of the present invention, the standard harness is made by integrally molding the exterior component with the standard electric wire by the molding machine provided on upstream of the conveyor, and the wiring harness is made by bundling the standard harness and a plurality of electric wires. Therefore, the harness manufacturing line is prevented from being stopped caused by a lack of the exterior components, and the wiring harness can be manufactured continuously.

Further, because the exterior components are integrally molded with the standard electric wire, it becomes unnecessary to store many exterior components as a stock, and the wiring harness can be manufactured in a space-saving manufacturing line in comparison with a conventional harness manufacturing line in which many exterior components are arranged in a manner surrounding the manufacturing line.

Further, when the wiring harness is manufactured by bundling the standard harness and the plurality of electric wires, the exterior components can be provided at the predetermined positions. Therefore, time for an adjusting operation can be reduced by saving time and labor for adjusting assembling positions of the exterior components, and the required time for manufacturing the wiring harness can be reduced.

According to the method for manufacturing a wiring harness as described in the second aspect of the present invention, the standard harness is made by integrally molding a plurality of exterior components by a plurality of molding machines with a single standard electric wire. Therefore, the plurality of exterior components is integrally molded by a series of molding machines, and productive efficiency can be improved.

According to the method for manufacturing a wiring harness as described in the third aspect of the present invention, the standard harness is made by integrally molding a plurality of exterior components by a plurality of molding machines with a plurality of standard electric wires and by bundling the plurality of standard electric wires. Therefore, the plurality of exterior components is integrally molded by a series of molding machines. Further, because the plurality of exterior components is respectively integrally molded with the plurality of standard electric wires by the plurality of molding machines, each of the plurality of molding machines is operated independently. Namely, influences of progresses of the other molding machines received by each molding machine can be reduced, and productive efficiency can be improved.

According to the method for manufacturing a wiring harness as described in the fourth aspect of the present invention, the standard harness is made by integrally molding the exterior components with the standard electric wire by the molding machines in synchronization with timing of conveying the wiring boards. Therefore, a stock of the standard harness can be reduced, and a storage space for the standard harnesses can be saved.

According to the method for manufacturing a wiring harness as described in the fifth aspect of the present invention, a set is made by combining the plurality of molding machines, and the standard harnesses are made by integrally molding the exterior components with the standard electric wires by a plurality of sets. Therefore, a plurality of standard harnesses can be manufactured, and the production volume can be increased.

According to the method for manufacturing a wiring harness as described in the sixth aspect of the present invention, the standard harnesses are made by integrally molding the exterior components with the standard electric wires by the plurality of sets in synchronization with timing of conveying the wiring boards. Therefore, a stock of the standard harness can be reduced, and a storage space for the standard harnesses can be saved.

According to the method for manufacturing a wiring harness as described in the seventh aspect of the present invention, because the exterior components have multiple types, multiple types of the exterior components can be easily provided on the wiring harness.

According to the method for manufacturing a wiring harness as described in the eighth aspect of the present invention, because the exterior component is a wiring clip, the wiring clip can be easily provided on the wiring harness, and the wiring harness can be clipped on a panel or the like at the predetermined position.

According to the device for manufacturing a wiring harness as described in the ninth aspect of the present invention, the molding machine integrally molds an exterior component in a predetermined position of a standard electric wire. Therefore, the harness manufacturing line is prevented from being stopped caused by a lack of the exterior components, and the wiring harness can be manufactured continuously.

Further, because the molding machine integrally molds an exterior component on a predetermined position of a standard electric wire, it becomes unnecessary to store many exterior components as a stock, and the wiring harness can be manufactured in a space-saving manufacturing line in comparison with a conventional harness manufacturing line in which many exterior components are arranged surrounding the manufacturing line.

Further, because the molding machine integrally molds an exterior component on a predetermined position of a standard electric wire, the exterior component is provided at the predetermined position where the standard harness and the plurality of electric wires are bundled. Therefore, time for an adjusting operation can be reduced by saving time and labor for adjusting assembling positions of the exterior components, and the required time for manufacturing the wiring harness can be reduced.

According to the device for manufacturing a wiring harness as described in the tenth aspect of the present invention, a plurality of molding machines is provided on upstream in the conveying direction of the harness manufacturing line. Therefore, the plurality of exterior components is integrally molded by a series of molding machines, and productive efficiency can be improved.

According to the device for manufacturing a wiring harness as described in the eleventh aspect of the present invention, a standard harness is made by integrally molding the exterior component with the standard electric wire by the molding machine in synchronization with timing of the harness manufacturing line. Therefore, it becomes unnecessary to store a large stock of the standard harness, a stock of the standard harness can be reduced, and a storage space for the standard harnesses can be saved. Resultingly, the device for manufacturing a wiring harness is space-saving.

According to the device for manufacturing a wiring harness as described in the twelfth aspect of the present invention, a set is made by combining the plurality of molding machines, and a plurality of sets is provided on upstream in the conveying direction of the harness manufacturing line. Therefore, a plurality of standard harnesses can be manufactured, and the production volume can be increased.

According to the device for manufacturing a wiring harness as described in the thirteenth aspect of the present invention, the standard harnesses are made by integrally molding the exterior components with the standard electric wires by the plurality of sets in synchronization with timing of the harness manufacturing line. Therefore, it becomes unnecessary to store a large stock of the standard harness, a stock of the standard harness can be reduced, and a storage space for the standard harnesses can be saved. Resultingly, the device for manufacturing a wiring harness is space-saving.

### [Brief Description of Drawings]

[Fig. 1]

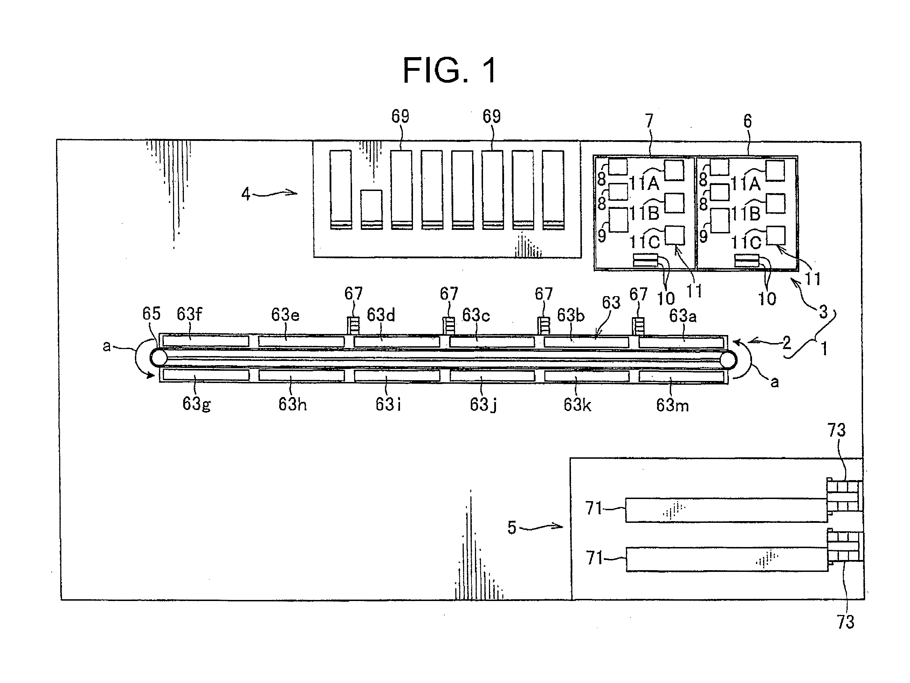

   Fig. 1 is a plan view for explaining a configuration of a device for manufacturing a wiring harness according to a first embodiment of the present invention.
[Fig. 2]

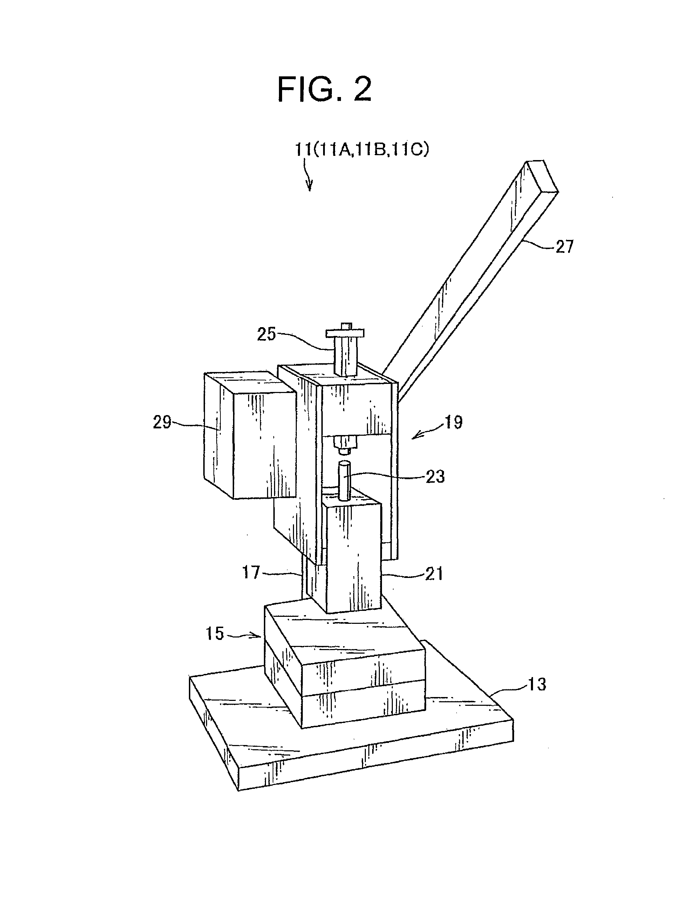

   Fig. 2 is a perspective view for explaining a configuration of a molding machine of the device for manufacturing a wiring harness shown in Fig. 1.
[Fig. 3A]

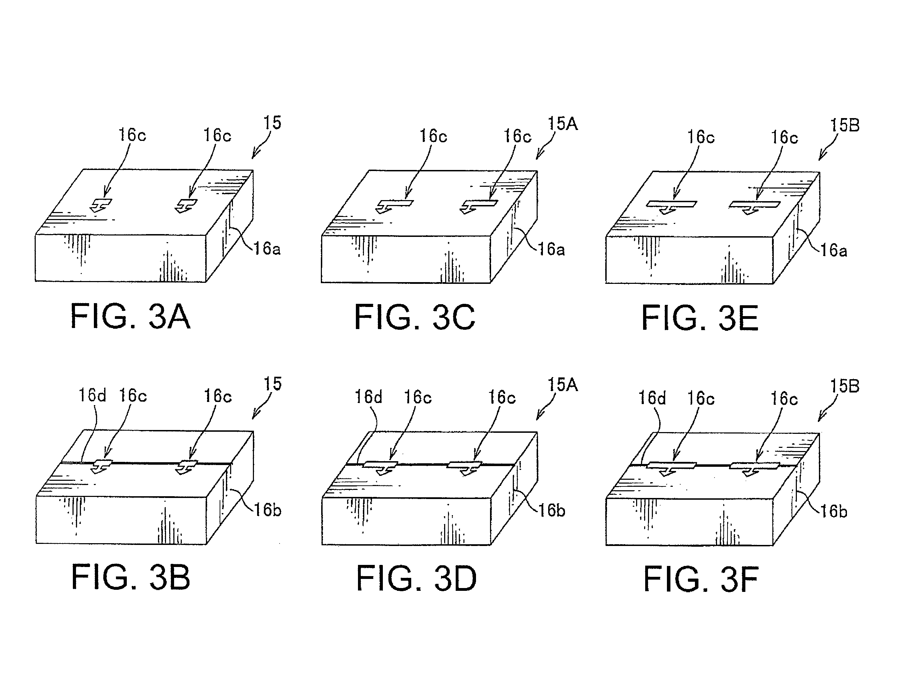

   Figs. 3A to 3E are perspective views for explaining a configuration of a molding die of the molding machine shown in Fig. 2, and Fig. 3A is a perspective view showing a cavity side of an upper molding die of a first molding machine.
[Fig. 3B]
   Fig. 3B is a perspective view showing a cavity side of a lower molding die of the first molding machine.
[Fig. 3C]
   Fig. 3C is a perspective view showing a cavity side of an upper molding die of a second molding machine.
[Fig. 3D]
   Fig. 3D is a perspective view showing a cavity side of a lower molding die of the second molding machine.
[Fig. 3E]
   Fig. 3E is a perspective view showing a cavity side of an upper molding die of a third molding machine.
[Fig. 3F]
   Fig. 3F is a perspective view showing a cavity side of a lower molding die of the third molding machine.
[Fig. 4]

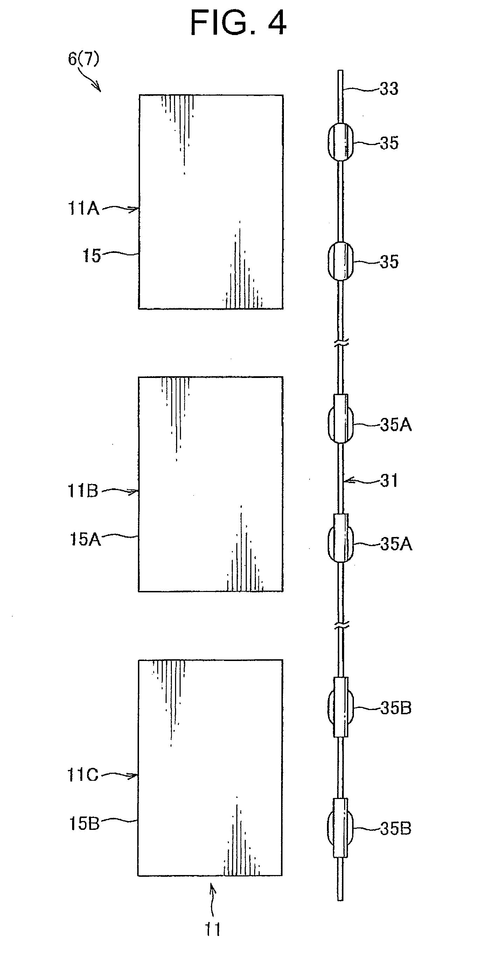

   Fig. 4 is an explanatory view for explaining a method for forming a standard harness according to the first embodiment of the present invention.
[Fig. 5]

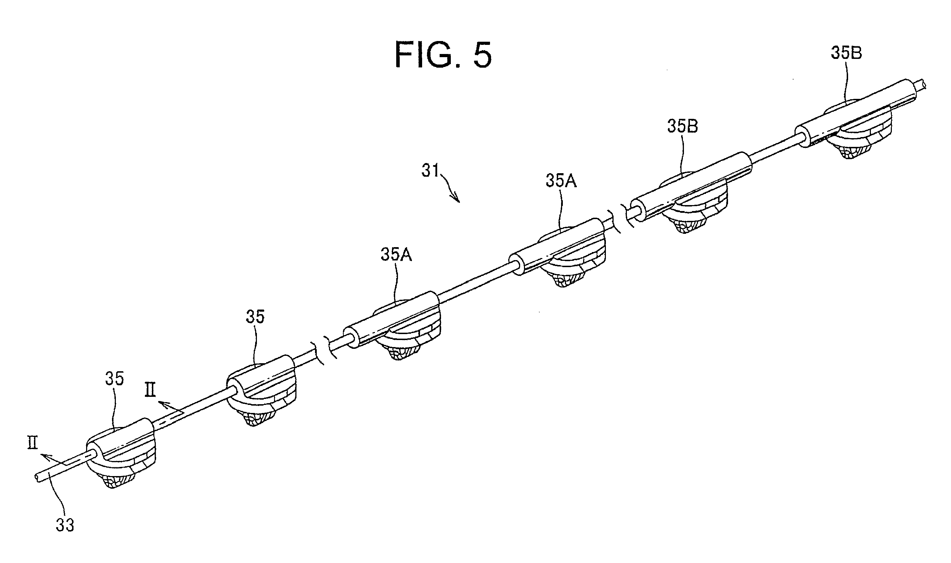

   Fig. 5 is a perspective view for explaining a configuration of the standard harness according to the first embodiment of the present invention.
[Fig. 6]

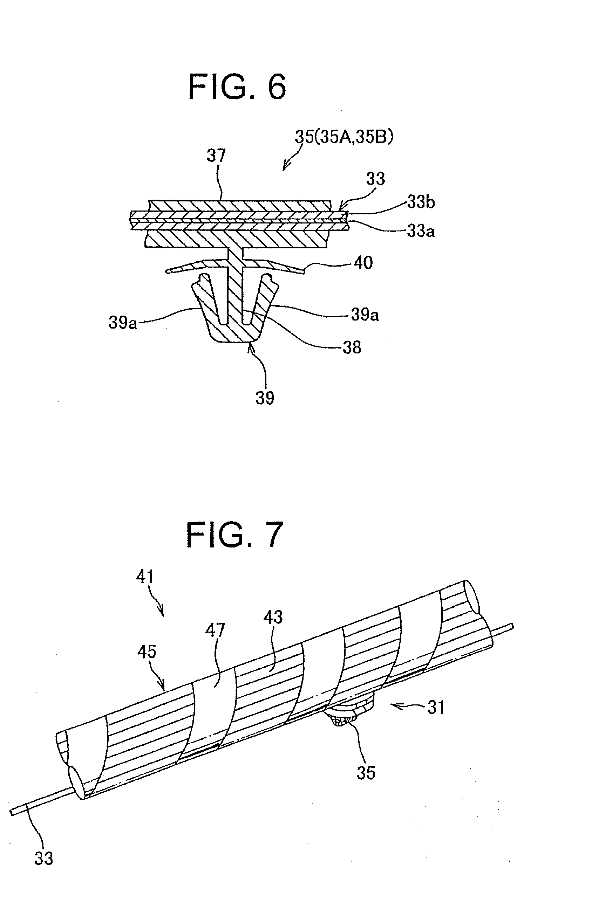

   Fig. 6 is a sectional view taken on line II-II of the standard harness shown in Fig. 5.
[Fig. 7]
   Fig. 7 is a perspective view for explaining a configuration of a sub harness made by bundling the standard harness shown in Fig. 5 and a bundle of electric wires.
[Fig. 8]

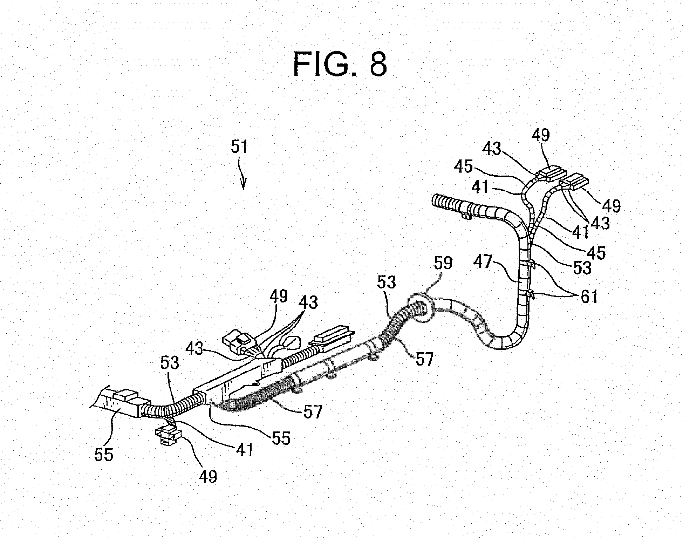

   Fig. 8 is a perspective view for explaining a configuration of a wiring harness according to the first embodiment of the present invention.
[Fig. 9]

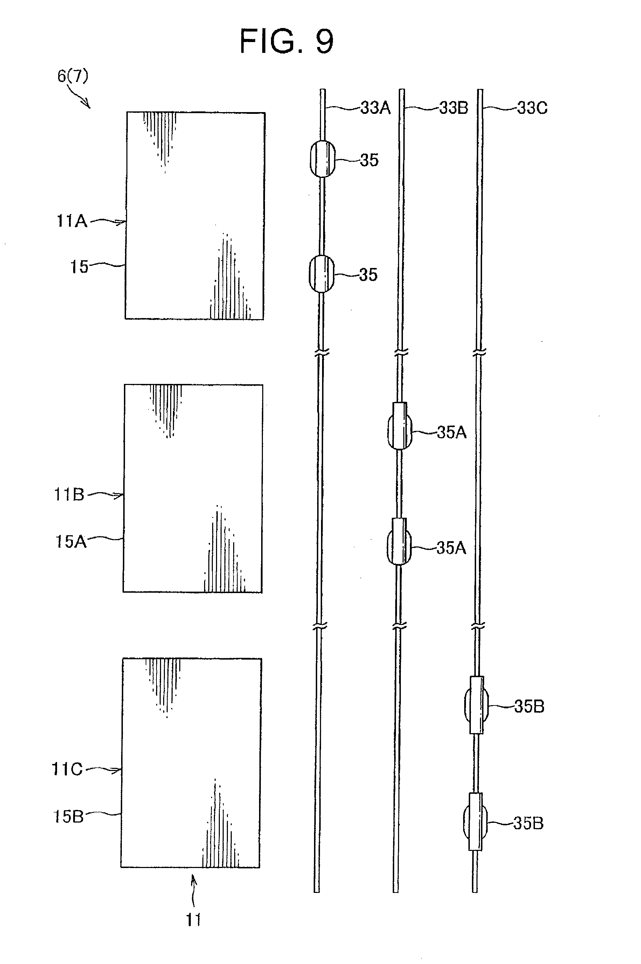

   Fig. 9 is a perspective view for explaining a method for forming a standard harness according to a second embodiment of the present invention.
[Fig. 10]

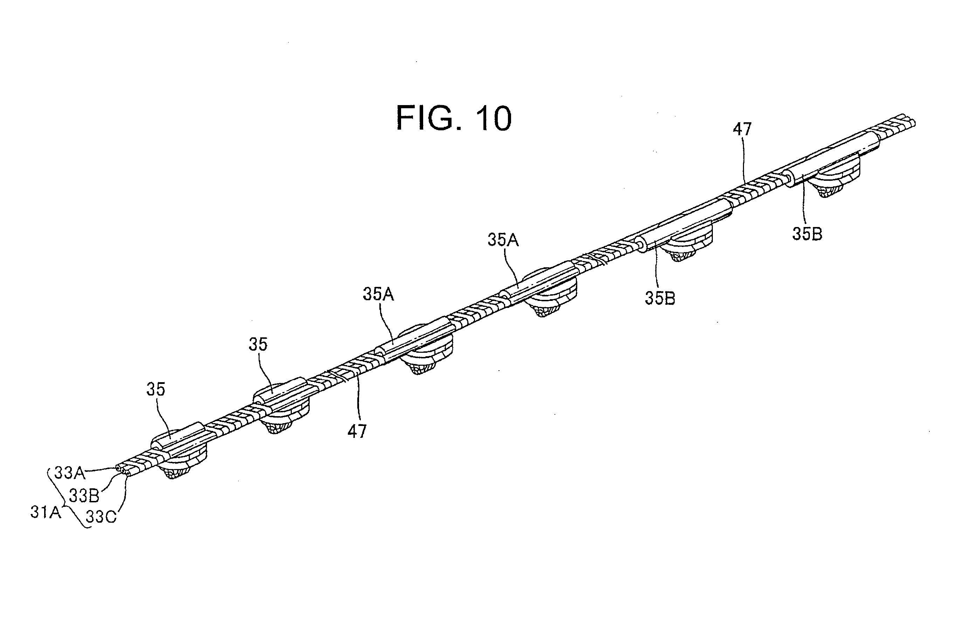

   Fig. 10 is a perspective view for explaining a configuration of the standard harness according to the second embodiment of the present invention.
[Fig. 11]
   Fig. 11 is a schematic plan view of a conventional harness manufacturing line.

### [Description of Embodiments]

Hereinafter an embodiment of the present invention will be explained with reference to accompanying drawings. Incidentally, the embodiment of the present invention described below only indicates a typical embodiment of the present invention, and the present invention is not limited to the embodiment. Therefore, various modifications and alterations of the present invention may be made within a scope of the present invention, namely, a person skilled in the art would have easily arrived, substantially identical, so-called within an equivalent range.

Fig. 1 is a plan view showing schematically a device for manufacturing a wiring harness 1 according to a first embodiment of the present invention. Fig. 2 is a perspective view showing a molding machine 11 according to the first embodiment of the present invention. Fig. 3 is a perspective view showing a molding die 15 of the molding machine 11.

As shown in Fig. 1, for example, the device for manufacturing a wiring harness 1 according to the first embodiment of the present invention includes: a harness manufacturing line 2 installed on a floor of a wiring harness manufacturing factory; and a molding line 3 installed on the floor, and provided together with the harness manufacturing line 2.

Incidentally, the floor is provided with a storage portion 4 for storing raw materials and various components used in the molding line 3, an inspection line 5 for inspecting the wiring harness manufactured by the harness manufacturing line 2, and not-shown ancillary facilities.

The harness manufacturing line 2 includes: a belt conveyor 65; and wiring boards 63 conveyed in a conveying direction (an arrow "a" direction) by the belt conveyor 65. The harness manufacturing line 2 repeats starting and stopping the belt conveyor 65 based on a predetermined tact time to rotate the wiring boards 63 in the conveying direction.

The belt conveyor 65 includes: an endless traveling belt; and a pair of pulleys stretching the traveling belt. One pulley of the pair of pulleys includes: a driving motor; and a power transmission mechanism for transmitting a power from the driving motor to the one pulley. The other pulley of the pair of pulley is provided rotatably.

The wiring boards 63 are composed of a plurality of wiring boards 63a to 63m (in an example shown, the number is twelve), and rotated by starting and stopping repeatedly in the conveying direction based on the predetermined tact time by the belt conveyor 65. Each wiring board 63 includes: a not-shown cradle movable on the floor; and a plate-shaped plate main body supported by the cradle. Each wiring board 63 is provided with a button switch or the like for starting or stopping the belt conveyor 65 corresponding to a progress of operations such as wiring operation.

An upper surface of the plate main body is formed in a flat table shape. A design indicating an assembling position of a wiring clip 35 (shown in Fig. 4) as a later-described exterior component and wiring patterns of a later-described standard harness 31 (shown in Fig. 5), a plurality of electric wires 43 (shown in Fig. 7), a sub harness 41 (shown in Fig. 7) and the like are depicted on the upper surface of the plate main body. Not-shown binding tools are standing on the upper surface of the plate main body along the wiring patterns. The binding tools are formed in various shapes, for example, a U-shape such as a tuning fork to bind the plurality of electric wires 43.

The molding line 3 is provided on upstream in a conveying direction of the harness manufacturing line 2, and includes: a first set 6 as a combination of a plurality of molding machines 11; and a second set 7 as a combination of the plurality of molding machines 11. The molding line 3 synchronizes the first and second sets 6, 7 with tack time of the wiring boards 63 conveyed by the belt conveyor 65, and integrally molds the wiring clip 35 (shown in Fig. 4) as the exterior component to manufacture the wiring harness.

Incidentally, in an example shown, the first and second sets 6, 7 are provided as a plurality of sets. However, the number of sets may be three or more other than two sets. Further, the standard harness 31 can also be made by a single set, namely, any one of the first and second sets 6, 7.

To provide the molding line 3 on upstream in the conveying direction of the harness manufacturing line 2 according to the present invention means that the molding line 3 is provided on upstream of the conveying direction (arrow "a" direction in Fig. 1) of the wiring boards 63 conveyed by the harness manufacturing line 2. Namely, in an example shown, the molding line 3 is provided near a wiring board 63a positioned at an initial position (the most upstream in the conveying direction).

Further, to synchronize the first and second sets 6, 7 with the tact time of the wiring board 63 means that the standard harness 31 (shown in Fig. 5) is formed in accordance with timing that a wiring board 63m positioned at the most downstream in the conveying direction is returned to the wiring board 63a positioned at the most upstream (initial position) in the conveying direction. Namely, when the standard harness 31 is wired on the wiring board 63a positioned at the initial position, the standard harness 31 is formed in accordance with manufacturing timing of the harness manufacturing line 2 without causing excess or deficiency of the standard harnesses 31 to be wired.

Namely, the first and second sets 6, 7 and the harness manufacturing line 2 manufacture the wiring clips 35 (shown in Fig. 4) only in the needed amount when needed, so-called "synchronized production".

A concrete system for synchronized production includes, for example, a sensor for detecting positions of the wiring boards 63a to 63m in the harness manufacturing line 2, a control device for controlling conveying speed of the wiring boards 63a to 63m based on the tact time of the harness manufacturing line 2, and a notifying device for notifying the timing to operators manufacturing in the first and second sets 6, 7 based on a detection signal of the sensor and on the control device. Incidentally, as the system for synchronized production, a well-known system can be used other than the system described above.

The first set 6 includes: molding machines 11 for integrally molding the wiring clips 35 (shown in Fig. 4) as the exterior components with the standard electric wire 33 (shown in Fig. 4); molding machines 8, 9 for integrally molding a corrugate tube, a protector, and the like as the exterior components; and a storage shelf 10 of the standard harnesses 31 (shown in Fig. 5).

The molding machines 11 are a plurality of (three in an example shown) machines composed of a first molding machine 11A, a second molding machine 11B, and a third molding machine 11C, and the standard harness 31 (shown in Fig. 5) is made by a series of the first to third molding machines 11A to 11C combined. Each of the first to third molding machines 11A to 11C is synchronized with the above timing of the harness manufacturing line 2 to integrally mold the wiring clip 35 (shown in Fig. 4) and the like with the standard electric wire 33 (shown in Fig. 4).

Each of the first to third molding machines 11A to 11C is a micro molding machine able to be handled by a single operator without an external power such as an electric motor, and as shown in Fig. 2 includes: a base 13; a molding die 15 fixed on the base 13; and a not-shown mold clamping mechanism for clamping the molding die 15; and an injection molding device 19 supported by a support rod 17 standing up from the base 13. Incidentally, the first molding machine 11A, the second molding machine 11B, and the third molding machine 11C are respectively provided with the molding die 15, the molding die 15A, and the molding die 15B.

According to the micro molding machine of the present invention, a maximum amount of the resin molded by a single injection molding is about 10 gram, and the molding die 15 can be manually clamped and the injection cylinder 25 can be driven by an air cylinder or a link mechanism.

The injection molding device 19 includes: a heating cylinder 21 provided with a heater for heating to melt synthetic resin such as polypropylene; a plunger 23 for injecting the melted resin or the like in the heating cylinder 21 through a not-shown nozzle; an injection cylinder 25 for moving forward the plunger 23; a handle 27 for driving the injection cylinder 25; and a temperature controller 29 for holding the heating temperature of the heating cylinder 21 in a desired temperature.

Each of the molding dies 15, 15A, 15B is a horizontally split die. As shown in Figs. 3A and 3B, each of an upper die 16a and a lower die 16b of the molding die 15 is respectively provided with a clip cavity 16c formed corresponding to an outer shape of the wiring clip 35 (shown in Fig. 4) on a facing surface facing to each other. Further, the lower die 16b is provided with a line cavity 16d formed corresponding to an outer shape of the standard electric wire 33 (shown in Fig. 4).

As shown in Figs. 3C and 3D, each of an upper die 16a and a lower die 16b of the molding die 15A is respectively provided with a clip cavity 16c formed corresponding to an outer shape of the wiring clip 35A (shown in Fig. 4) on a facing surface facing to each other. Further, the lower die 16b is provided with a line cavity 16d formed corresponding to an outer shape of the standard electric wire 33 (shown in Fig. 4).

As shown in Figs. 3E and 3F, each of an upper die 16a and a lower die 16b of the molding die 15B is respectively provided with a clip cavity 16c formed corresponding to an outer shape of the wiring clip 35B (shown in Fig. 4) on a facing surface facing to each other. Further, the lower die 16b is provided with a line cavity 16d formed corresponding to an outer shape of the standard electric wire 33 (shown in Fig. 4).

The clip cavity 16c is so set that a capacity is several square centimeters when any one of the molding dies 15, 15A, and 15B is clamped. In an example shown, two clip cavities 16c are provided. However, the number of the clip cavities 16c may be two or more, or may be one.

Further, the clip cavities 16c are positioned at the predetermined positions where the wiring clips 35, 35A, 35B (shown in Fig. 4) can be locked with attaching holes of a panel of a vehicle or the like when a later-described wiring harness 51 (shown in Fig. 8) is attached to the panel. Namely, relative positions of the molded wiring clips 35, 35A, 35B (shown in Fig. 4) with respect to the standard electric wire 33 (shown in Fig. 4) are so provided as to be locked with the panel of a vehicle or the like.

According to the present invention, the phrase that the wiring clips 35, 35A, 35B (shown in Fig. 4) are positioned at the predetermined positions where the wiring clips can be locked with the attaching holes of the panel means that in the standard harness 31 (shown in Fig. 4) formed by injection molding the melted resin into the clip cavities 16c which are held at the relative positions of the wiring clips 35, 35A, 35B upon designing the wiring harness 51 (shown in Fig. 8), the relative positions of the wiring clips 35, 35A, 35B with respect to the standard electric wire 33 (shown in Fig. 4) are the positions defined upon designing except an error caused upon injection molding and a design tolerance.

The molding machines 8, 9 respectively make the exterior components such as a corrugate tube and a protector which are externally mounted on the wiring harness. Because the molding machines 8, 9 respectively make the exterior components such as a corrugate tube and a protector in synchronization with the above-described timing of the harness manufacturing line 2, there is no excess or deficiency of the exterior components such as a corrugate tube and a protector.

As shown in Fig. 1, similar to the above-described first set 6, the second set 7 includes: molding machines 11 for integrally molding the wiring clips 35 (shown in Fig. 4) as the exterior components with the standard electric wire 33 (shown in Fig. 4); molding machines 8, 9 for integrally molding a corrugate tube, a protector, and the like as the exterior components; and a storage shelf 10 of the standard harnesses 31 (shown in Fig. 5).

Similar to the above-described first set 6, the molding machines 11 are a plurality of (three in an example shown) machines composed of a first molding machine 11A, a second molding machine 11B, and a third molding machine 11C, and the standard harness 31 (shown in Fig. 5) is made by a series of the first to third molding machines 11A to 11C combined. Each of the first to third molding machines 11A to 11C is synchronized with the above timing of the harness manufacturing line 2 to integrally mold the wiring clip 35 (shown in Fig. 4) and the like with the standard electric wire 33 (shown in Fig. 4).

Similar to the above-described first set 6, the molding machines 8, 9 respectively make the exterior components such as a corrugate tube 57, a protector 55, a grommet 59, a clip 61 and the like (shown in Fig. 8) which are externally mounted on the wiring harness 51.

Further, because the molding machines 8, 9 respectively make the exterior components such as a corrugate tube and a protector in synchronization with the above-described timing of the harness manufacturing line 2, there is no excess or deficiency of the exterior components such as a corrugate tube and a protector.

As shown in Fig. 1, the storage portion 4 includes a storage shelf 69 in which raw materials and various components are stored, and the inspection line 5 includes: an inspection table 71 on which an appearance inspection and a continuity check of the wiring harness 51 (shown in Fig. 8) are performed; and a packing table 73 on which the wiring harness which is passed the inspection and shipped is packed.

Next, a method for manufacturing the wiring harness 1 with the device for manufacturing a wiring harness 1 according to the first embodiment of the present invention configured as the above will be explained with reference to Figs. 4 to 8.

As shown in Fig. 4, each of the first and second sets 6, 7 is synchronized with the above-described timing of the harness manufacturing line 2, and when the wiring board 63 is returned to the position of the wiring board 63a corresponding to the initial position, wiring clips 35, 35A, 35B are integrally molded with the single standard electric wire 33 at the positions able to be locked with the panel of a vehicle body or the like by the respective molding dies 15, 15A, 15B of the first to third molding machines 11A, 11B, 11C combined as described above.

At this time, the wiring clip 35 is integrally molded with the standard electric wire 33 by the molding die 15 of the first molding machine 11A, the wiring clip 35A is integrally molded with the standard electric wire 33 by the molding die 15B of the second molding machine 11B, and the wiring clip 35B is integrally molded with the standard electric wire 33 by the molding die 15C of the third molding machine 11C.

Specifically, the wiring clip 35 is integrally molded with the standard electric wire 33 by the molding die 15 of the first molding machine 11A, then the wiring clip 35A is integrally molded with the standard electric wire 33 by the molding die 15B of the second molding machine 11B, and then the wiring clip 35B is integrally molded with the standard electric wire 33 by the molding die 15C of the third molding machine 11C.

At this time, for example, in the first molding machine 11A, an end of the standard electric wire 33 is aligned by a positioning jig or the like, in the second molding machine 11B, an end of the molded wiring clip 35 is aligned by a positioning jig or the like, and in the third molding machine 11C, an end of the molded wiring clip 35A is aligned by a positioning jig or the like. Thereby, relative positions of the wiring clips 35, 35A, 35B with respect to the standard electric wire 33 are set at the positions able to be locked with the attaching holes of the panel of a vehicle body or the like.

In this way, respective wiring clips 35, 35A, 35B are integrally molded with the single standard electric wire 33 by the respective first, second, and third molding machines 11A, 11B, 11C to make the standard harness 31, for example, shown in Fig. 5.

As shown in Fig. 6, in the standard harness 31 formed in this way, the standard electric wire 33 includes: a conductive core wire 33a; and an insulating cover 33b. The core wire 33a is made by twisting a plurality of conductive wires.

The conductive wires composing the core wire 33a are made of conductive metal such as copper or aluminum. The cover 33b is made of synthetic resin such as polyvinyl chloride. Further, the cover 33b covers the core wire 33a. Incidentally, the core wire 33a may be made of a single conductive wire.

Each of the wiring clips 35, 35A, 35B integrally molded with the standard harness 31 includes: a main body portion 37 covering a periphery of the cover 33b; a column portion 38 standing up from the main body portion 37; a pressing portion 40 formed in an umbrella shape extending from a middle of the column shape to press a circumference of the attaching hole of the panel; and a locking portion 39 provided on a tip of the column portion 38.

Further, the locking portion 39 is provided with a pair of locking pieces 39a extending and gradually separated from each other from the tip toward a base end of the column portion 38 to be locked with a peripheral edge of the attaching hole.

Next, the above-described standard harness 31 is wired on the wiring board 63a (shown in Fig. 1) corresponding to the initial position along a wiring pattern depicted on a surface of the wiring board 63a.

Next, the wiring board 63a (shown in Fig. 1) is sequentially conveyed and stopped at the positions of the wiring boards 63b to 63g (shown in Fig. 1) toward the downstream side in the conveying direction (an arrow "a" direction). Further, at the positions of the wiring boards 63b to 63g, the standard harness 31 and the required electric wires (shown in Fig. 7) are wired along the wiring pattern in accordance with an assembling procedure and an assembling process.

At this time, accessories such as electric wires 43 (shown in Fig. 7) and a connector 49 (shown in Fig. 8) provided at ends of the electric wires 43 are supplied from the storage portion 4 (shown in Fig. 1) previously storing parts corresponding to the wiring harness 51 (shown in Fig. 8) to be manufactured and parts common to the other wiring harnesses.

Incidentally, the standard electric wire 33 and the electric wire 43 of the present invention may be the same, or may be different from each other. Further, the standard electric wire 33 may be colored in a color different from the electric wire 43 for differentiating the standard electric wire 33. Still further, connectors 49 (shown in Fig. 8) may be provided on both ends of the standard electric wire 33 together with the electric wire 43 and used as a signal line.

Next, the wiring board 63g (shown in Fig. 1) is conveyed and stopped at the position of the wiring board 63h (shown in Fig. 1), and as shown in Fig. 7, the plurality of electric wires 43 is bundled to form a bundle of electric wires 45, and an adhesive tape 47 is wound around the standard electric wire 33 and the bundle of electric wires 45 of the standard harness 31 to form the sub harness 41.

At this time, because the standard harness 31 is provided throughout a whole length of the sub harness 41, an adjustment operation of the assembling positions of the wiring clips 35, 35A, 35B can be omitted, and owing to this omission of the adjustment operation, production time of the sub harness 41 is reduced. Further, a plurality of sub harnesses 41 is formed corresponding to a vehicle in which the sub harnesses 41 are to be wired.

Next, the wiring board 63h (shown in Fig. 1) is sequentially conveyed and stopped at the positions of the wiring boards 63i to 63k (shown in Fig. 1) toward the downstream side in the conveying direction (an arrow "a" direction). Further, as shown in Fig. 8, at the positions of the wiring boards 63i to 63k, the adhesive tape 47 is wound around the plurality of sub harnesses 41 to form a main harness 53, and the external components such as a protector 55, a tube 57, a grommet 59, a clip 61 and the like are assembled to form the wiring harness 51 in accordance with an assembling procedure and an assembling process.

At this time, because the above-described wiring clips 35, 35A, 35B (shown in Fig. 5 and the like) are provided at the positions able to be locked with the attaching holes of the panel of a vehicle body or the like in the wiring harness 51, an adjustment operation of the assembling positions of the wiring clips 35, 35A, 35B can be omitted, and owing to this omission of the adjustment operation, production time of the wiring harness 51 is reduced. Incidentally, the external components such as a protector 55, a tube 57, a grommet 59, a clip 61 and the like are supplied from the above-described first and second sets 6, 7 (shown in Fig. 1).

Next, the wiring board 63k is conveyed and stopped at the position of the wiring board 63m corresponding to the most downstream in the conveying direction (an arrow "a" direction), and the wiring harness 51 is removed from the wiring board 63m. The removed wiring harness 51 is put on an inspection table 71 of the inspection line 5 (shown in Fig. 1), and various product inspections such as an appearance inspection or a continuity check are performed. The wiring harness 51 passed these product inspections is formed in a predetermined shape in a packing table 73 and packed in a packaging box or the like.

As explained above, in the method for manufacturing a wiring harness 51 according to the first embodiment of the present invention, the standard harness 31 is formed by integrally molding the wiring clips 35, 35A, 35B as the exterior components at the predetermined positions of the standard electric wire 33 with the molding machine 11 provided on upstream in the conveying direction of the harness manufacturing line 2 having the belt conveyer 65 as the conveying device to convey the plurality of wiring boards 63a to 63m in the conveying direction (an arrow "a" direction), the standard harness 31 is wired on the wiring board 63a, the plurality of electric wires 43 is wired along the standard harness 31, and the wiring harness 51 is manufactured by bundling the standard harness 31 and the plurality of electric wires 43 with the molding machine 11. Therefore, because the wiring clips 35, 35A, 35B are molded by the molding machine 11 provided on upstream of the conveying direction of the harness manufacturing line 2, the production of the wiring harness 51 in the harness manufacturing line 2 is prevented from being stopped caused by a lack of the wiring clips 35, 35A, 35B. Resultingly, the wiring harness 51 can be manufactured continuously.

Further, because the wiring clips 35, 35A, 35B are integrally molded with the standard electric wire 33, it becomes unnecessary to store many wiring clips 35, 35A, 35B as a stock, and an installation space can be saved in comparison with a conventional harness manufacturing line in which many exterior components are stored.

Further, when the wiring harness 51 is manufactured by bundling the standard harness 31 and the plurality of electric wires 43, the wiring clips 35, 35A, 35B are provided at the predetermined positions. Therefore, an adjusting operation of the assembling positions of the wiring clips 35, 35A, 35B can be omitted to save the time for the adjusting operation, and the required time for manufacturing the wiring harness can be reduced.

Further, in the method for manufacturing a wiring harness 51 according to the first embodiment of the present invention, the wiring clips 35, 35A, 35B as the exterior components are integrally molded with the single standard electric wire 33 to form the standard harness 31 by the first molding machine 11A, the second molding machine 11B, and the third molding machine 11C as the plurality of molding machines. Therefore, the plurality of wiring clips 35, 35A, 35B is integrally molded by a series of molding machines 11A to 11C, and productive efficiency can be improved.

Further, in the method for manufacturing a wiring harness 51 according to the first embodiment of the present invention, the standard harness 31 is made by integrally molding the wiring clips 35, 35A, 35B as the exterior components with the standard electric wire 33 by the molding machines 11 in synchronization with timing of conveying the wiring boards 63a to 63m. Therefore, a stock of the standard harness 31 can be reduced, and a storage space for the standard harnesses 31 can be saved.

Further, in the method for manufacturing a wiring harness 51 according to the first embodiment of the present invention, a set is made by combining the first molding machine 11A, the second molding machine 11B, and the third molding machine 11C as the plurality of molding machines, and the standard harnesses 31 are made by integrally molding the wiring clips 35, 35A, 35B as the exterior components with the standard electric wires 33 by the first set 6 and the second set 7 as a plurality of sets. Therefore, two standard harnesses 31 can be manufactured, and the production volume can be increased.

Further, in the method for manufacturing a wiring harness 51 according to the first embodiment of the present invention, the standard harnesses 31 are made by integrally molding the wiring clips 35, 35A, 35B as the exterior components with the standard electric wires 33 by the first set 6 and the second set 7 as the plurality of sets in synchronization with timing of conveying the wiring boards 63a to 63m. Therefore, the standard harness 31 can be made as necessary, and a stock of the standard harness 31 can be reduced, and a storage space for the standard harnesses 31 can be saved.

Further, in the method for manufacturing a wiring harness 51 according to the first embodiment of the present invention, because the wiring clips 35, 35A, 35B as the exterior components have multiple types, multiple types of the wiring clips 35, 35A, 35B can be easily provided on the wiring harness 51.

Further, in the method for manufacturing a wiring harness 51 according to the first embodiment of the present invention, because the exterior components are the wiring clips 35, 35A, 35B, the wiring clips 35, 35A, 35B can be easily provided on the wiring harness 51, and the wiring harness 51 can be clipped on a panel or the like at a predetermined position.

Further, in the device 1 for manufacturing a wiring harness 51 according to the first embodiment of the present invention, the device includes: the harness manufacturing line 2 conveying the plurality of wiring boards 63a to 63m in a conveying direction (an arrow "a" direction); and the molding machine 11 provided together with the harness manufacturing line 2, and integrally molding the wiring clips 35, 35A, 35B as the exterior components on predetermined positions of the standard electric wire 33. Further, the molding machine 11 is provided on upstream in the conveying direction of the harness manufacturing line 2. Therefore, because the molding machine 11 integrally molds the wiring clips 35, 35A, 35B, the harness manufacturing line 2 is prevented from being stopped caused by a lack of the wiring clips 35, 35A, 35B, and the wiring harness 51 can be manufactured continuously.

Further, because the molding machine 11 integrally molds the wiring clips 35, 35A, 35B as exterior components on predetermined positions of the standard electric wire 33, it becomes unnecessary to store a large stock of the wiring clips 35, 35A, 35B, and the wiring harness 51 can be manufactured in a space-saving manufacturing line in comparison with a conventional harness manufacturing line in which many exterior components are arranged surrounding the manufacturing line.

Further, because the molding machine 11 integrally molds the wiring clips 35, 35A, 35B as exterior components on predetermined positions of the standard electric wire 33, the wiring clips 35, 35A, 35B are provided at the predetermined positions of the wiring harness 51 where the standard harness 31 and the plurality of electric wires 43 are bundled. Therefore, time for an adjusting operation can be reduced by saving time and labor for adjusting assembling positions of the wiring clips 35, 35A, 35B, and the required time for manufacturing the wiring harness can be reduced.

Further, in the device 1 for manufacturing a wiring harness 51 according to the first embodiment of the present invention, a plurality of molding machines 11 is provided on upstream in the conveying direction of the harness manufacturing line 2. Therefore, the wiring clips 35, 35A, 35B are integrally molded by a series of first to third molding machines 11A, 11B, 11C as the plurality of molding machines, and productive efficiency can be improved.

Further, in the device 1 for manufacturing a wiring harness 51 according to the first embodiment of the present invention, the standard harness 31 is made by integrally molding the wiring clips 35, 35A, 35B as exterior components with the standard electric wire 33 by the molding machine 11 in synchronization with timing of the harness manufacturing line 2. Therefore, it becomes unnecessary to store a large stock of the standard harness 31, a stock of the standard harness 31 can be reduced, and a storage space for the standard harnesses 31 can be saved. Resultingly, the device 1 for manufacturing a wiring harness 51 is space-saving.

Further, in the device 1 for manufacturing a wiring harness 51 according to the first embodiment of the present invention, a set is made by combining the first molding machine 11A, the second molding machine 11B, and the third molding machine 11C as the plurality of molding machines, and a plurality of sets is provided on upstream in the conveying direction of the harness manufacturing line 2. Therefore, a plurality of standard harnesses 31 can be manufactured, and the production volume can be increased.

Further, in the device 1 for manufacturing a wiring harness 51 according to the first embodiment of the present invention, the standard harnesses 31 are made by integrally molding wiring clips 35, 35A, 35B as the exterior components with the standard electric wires 33 by the first set 6 and the second set 7 as the plurality of sets in synchronization with timing of the harness manufacturing line 2. Therefore, it becomes unnecessary to store a large stock of the standard harness 31, a stock of the standard harness 31 can be reduced, and a storage space for the standard harnesses 31 can be saved. Resultingly, the device 1 for manufacturing a wiring harness 51 is space-saving.

Next, a method for manufacturing a wiring harness according to a second embodiment of the present invention will be explained with reference to Figs. 9 and 10. Incidentally, the same components as the first embodiment are denoted the same reference signs and the explanations thereof are omitted.

According to the second embodiment, a difference from the method for manufacturing a wiring harness according to the first embodiment is that a standard harness 31A is made by integrally molding a plurality of wiring clips 35, 35A, 35B with a plurality of standard electric wires 33A, 33B, 33C at predetermined positions by the first molding machine 11A, the second molding machine 11B, and the third molding machine 11C as the plurality of molding machines.

Namely, as shown in Fig. 9, a plurality of (two in an example shown) wiring clips 35 is integrally molded with a first standard electric wire 33A at the above-described predetermined positions by first molding machines 11A of the first and second sets 6, 7, a plurality of (two in an example shown) wiring clips 35A is integrally molded with a second standard electric wire 33B at the above-described predetermined positions by second molding machines 11B of the first and second sets 6, 7, and a plurality of (two in an example shown) wiring clips 35B is integrally molded with a third standard electric wire 33C at the above-described predetermined positions by third molding machines 11C of the first and second sets 6, 7.

As shown in Fig. 10, for example, an adhesive tape 47 is wound around the first standard electric wire 33A on which the wiring clips 35 are integrally molded, the second standard electric wire 33B on which the wiring clips 35A are integrally molded, and the third standard electric wire 33C on which the wiring clips 35B are integrally molded to form the standard harness 31A.

Incidentally, the first set 6 having a series of the first molding machine 11A, the second molding machine 11B, and the third molding machine 11C as the plurality of molding machines, and the second set 7 having a series of the first molding machine 11A, the second molding machine 11B, and the third molding machine 11C as the plurality of molding machines make the first standard electric wire 33A on which the wiring clips 35 are integrally molded, the second standard electric wire 33B on which the wiring clips 35A are integrally molded, and the third standard electric wire 33C on which the wiring clips 35B in synchronization with manufacturing timing of the above-described harness manufacturing line 2.

The standard harness 31A formed in this way is wired on the wiring board 63a corresponding to the initial position in the conveying direction (an arrow "a" direction) by the above-described device 1 for manufacturing a wiring harness 51, and the wiring harness 51 is manufactured by the above-described manufacturing method.

As explained above, in the method for manufacturing a wiring harness 51 according to the second embodiment of the present invention, the standard harness 31 is made by integrally molding the wiring clips 35, 35A, 35B as the plurality of exterior components with the first standard electric wire 33A, the second standard electric wire 33B, and the third standard electric wire 33C as the plurality of standard electric wire by the first molding machine 11A, the second molding machine 11B, and the third molding machine 11C as the plurality of molding machines, and by bundling the first standard electric wire 33A, the second standard electric wire 33B, and the third standard electric wire 33C. Therefore, the plurality of wiring clips 35, 35A, 35B can be integrally molded by a series of the first molding machine 11A, the second molding machine 11B, and the third molding machine 11C. Further, the wiring clips 35, 35A, 35B can be integrally molded with the respective first standard electric wire 33A, the second standard electric wire 33B, and the third standard electric wire 33C by the respective first molding machine 11A, the second molding machine 11B, and the third molding machine 11C. Thereby, the first molding machine 11A, the second molding machine 11B, and the third molding machine 11C are independent from each other. Namely, influences of progresses of the other molding machines received by each of the molding machines 11A, 11B, 11C can be reduced, and productive efficiency can be improved.

Incidentally, in the embodiments of the present invention, the harness manufacturing line 2 in which the wiring board 63 is rotated in the conveying direction is explained. However, for example, the wiring board 63 may be moved straight from one side to the other side.

Further, various molded products such as fixture components of clamp, clip or the like, plug cap, waterproof plug, or grommet may be integrally molded with the standard electric wire 33 (33A, 33B, 33C) by the molding machine 11 instead of the wiring clip 35 (35A, 35B) as the exterior component to form the standard harness 31 (31A).

Further, the types of the plurality of wiring clips 35, 35A, 35B may be the same, or may be two types in which the wiring clip 35 and the wiring clip 35B are the same other than that all of the wiring clips 35, 35A, 35B are different from each other according to the embodiments.

Further, because the wiring clips 35, 35A, 35B are formed in a shape suitable for their use, they are not limited to the shapes shown, and well-known shapes of the wiring clips can be used.

Further, a plurality of clip cavities 16c provided on the molding die 15 (15A, 15B) is provided corresponding to shapes depending on use of the molded wiring clip 35 (35A, 35B). Therefore, the shapes (types) of the clip cavities 16c may be the same or may be different from each other.

Further, other than the above embodiments in which the wiring harness 51 is manufactured in a synchronization manner by synchronizing the harness manufacturing line 2 as a main line to the molding line 3 as a line side, the wiring harness 51 can be manufactured in a synchronization manner with the main line being the harness manufacturing line 2 and the line side being a molding device (or a molding process) in which components are integrally molded with the molded components.

In such a case, in the molding device (or the molding process), fixing components such as a clip, a clamp, a waterproof plug, and a plug cap are integrally molded (so-called two-color molding) with the previously molded components such as a protector and a corrugate tube to manufacture secondary molded components. Then, the secondary molded components are assembled with the sub harness 41, the main harness 53, and the like in synchronization with the harness manufacturing line 2 as the main line to manufacture the wiring harness 51.

Incidentally, the exterior components such as a protector and a corrugate tube may be integrally molded with the standard electric wire 33 previously, and further, the locking portion 39 and the like may be integrally molded (so-called two-color molding) with the exterior components.

In this way, because the secondary molded components mounted on the wiring harness 51 are manufactured in synchronization with the harness manufacturing line 2, the secondary molded components can be supplied without excess or deficiency, and it becomes unnecessary to store many secondary molded components as a stock.

Further, electronic products can be manufactured in a synchronization manner with the main line as the manufacturing line and the line side as the molding device (or molding process) for further integrally molding components with the molded components.

In such a case, in the molding device (or molding process) as the line side, for example, fixing components such as a clip and a clamp, a watertight plug, and a plug cap are integrally molded (so-called two-color molding) with the previously molded components such as a housing of an electronic unit, a housing of an electrical junction box, or a housing of a meter to manufacture secondary molded components. Then, the secondary molded components are assembled to the predetermined positions in synchronization with the manufacturing line to manufacture electronic products such as the electronic unit, the electrical junction box, and the meter.

In this way, because the housings of such as the electronic products are manufactured in synchronization with the manufacturing line, the housings can be supplied without excess or deficiency, and it becomes unnecessary to store a lot of housings as a stock.

Further, vehicle body components, electronic products and the like can be manufactured in a synchronization manner with the main line as the vehicle manufacturing line and the line side as the molding device (or molding process) for further integrally molding components with the molded components.

In such a case, in the molding device (or molding process) as the line side, for example, fixing components such as a clip and a clamp, a watertight plug, and a plug cap are integrally molded (so-called two-color molding) with the previously molded components such as a bumper, a door trim, an instrument panel and the other vehicle body components, or the previously molded components such as a housing of an electronic unit, a housing of an electrical junction box, or a housing of a meter to manufacture secondary molded components. Then, the secondary molded components are assembled to the predetermined positions in synchronization with the vehicle manufacturing line to manufacture a vehicle, and the electronic products such as the electronic unit, the electrical junction box, and the meter mounted on the vehicle.

In this way, because the vehicle body components and the housings of such as the electronic products are manufactured in synchronization with the vehicle manufacturing line, it becomes unnecessary to store many vehicle body components composing a vehicle, and a lot of housings of the electronic products mounted on a vehicle as a stock in the vehicle manufacturing line.

### [Reference Signs List]

1 device for manufacturing a wiring harness
2 harness manufacturing line
3 molding line
6 first set
7 second set
11 molding machine
11A first molding machine
11B second molding machine
11C third molding machine
31 standard harness
33 standard electric wire
33A first standard electric wire
33B second standard electric wire
33C third standard electric wire
35 wiring clip (exterior component)
41 sub harness
43 electric wire
51 wiring harness
63 wiring board
65 belt conveyor (conveying device)

## Claims

1. A method for manufacturing a wiring harness comprising the steps of:
forming a standard harness by integrally molding an exterior component in a predetermined position of a standard electric wire by a molding machine provided on upstream in a conveying direction of a conveyor conveying a plurality of wiring boards in the conveying direction;
wiring the standard harness on the wiring board, and wiring a plurality of electric wires along the standard harness; and
bundling the standard harness and the plurality of electric wires.

2. The method for manufacturing a wiring harness as claimed in claim 1,
wherein the standard harness is made by integrally molding a plurality of exterior components by a plurality of molding machines with a single standard electric wire.

3. The method for manufacturing a wiring harness as claimed in claim 1,
wherein the standard harness is made by integrally molding a plurality of exterior components by a plurality of molding machines with a plurality of standard electric wires and by bundling the plurality of standard electric wires.

4. The method for manufacturing a wiring harness as claimed in claim 2 or claim 3,
wherein the standard harness is made by integrally molding the exterior components by the molding machines with the standard electric wire in synchronization with timing of conveying the wiring boards.

5. The method for manufacturing a wiring harness as claimed in claim 2 or claim 3,
wherein a set is made by combining the plurality of molding machines, and
wherein the standard harnesses are made by integrally molding the exterior components with the standard electric wires by a plurality of sets.

6. The method for manufacturing a wiring harness as claimed in claim 5,
wherein the standard harnesses are made by integrally molding the exterior components with the standard electric wires by the plurality of sets in synchronization with timing of conveying the wiring boards.

7. The method for manufacturing a wiring harness as claimed in any one of claims 1 to 6,
wherein the exterior components have multiple types.

8. The method for manufacturing a wiring harness as claimed in any one of claims 1 to 7,
wherein the exterior component is a wiring clip.

9. A device for manufacturing a wiring harness comprising:
a harness manufacturing line conveying a plurality of wiring boards in a conveying direction; and
a molding machine provided together with the harness manufacturing line, and integrally molding an exterior component in a predetermined position of a standard electric wire,
wherein the molding machine is provided on upstream in the conveying direction of the harness manufacturing line.

10. The device for manufacturing a wiring harness as claimed in claim 9,
wherein a plurality of molding machines is provided on upstream in the conveying direction of the harness manufacturing line.

11. The device for manufacturing a wiring harness as claimed in claim 9 or claim 10,
wherein a standard harness is made by integrally molding the exterior component with the standard electric wire by the molding machine in synchronization with timing of the harness manufacturing line.

12. The device for manufacturing a wiring harness as claimed in claim 10,
wherein a set is made by combining the plurality of molding machines, and
wherein a plurality of sets is provided on upstream in the conveying direction of the harness manufacturing line.

13. The device for manufacturing a wiring harness as described in claim 12,
wherein the standard harnesses are made by integrally molding the exterior components with the standard electric wires by the plurality of sets in synchronization with timing of the harness manufacturing line.
